# EUROPEAN PATENT SPECIFICATION

(11) **EP 1 719 325 B1**
(45) Date of publication and mention of the grant of the patent: **29.03.2017**
(21) Application number: 05705873.7
(22) Date of filing: 21.01.2005
(51) Int. Cl.: H04L 29/06

(54) **METHOD FOR OPTIMALLY UTILIZING A PEER TO PEER NETWORK**
VERFAHREN ZUR OPTIMALEN VERWENDUNG EINES PEER-TO-PEER-NETZWERKS
PROCEDE PERMETTANT UNE UTILISATION OPTIMALE D'UN RESEAU POSTE A POSTE

(30) Priority: 23.01.2004 US 764111; 21.01.2005 US 39981
(43) Date of publication of application: 08.11.2006
(73) Proprietor: Tiversa IP, Inc., Cranberry Township, PA 16066 (US)
(72) Inventor: HOPKINS, Samuel, P., Freedom, PA 15042 (US)
(74) Representative: Röthinger, Rainer
(86) International application number: PCT/US2005/001622
(87) International publication number: WO 2005/074229

(56) References cited:
- WO-A-03/009524
- US-A1- 2002 073 204
- US-A1- 2002 143 989
- US-A1- 2003 055 892
- US-A1- 2003 191 828
- ZUPENG LI ET AL: "Research of peer-to-peer network architecture" COMMUNICATION TECHNOLOGY PROCEEDINGS, 2003. ICCT 2003. INTERNATIONAL CONFERENCE ON APRIL 9 - 11, 2003, PISCATAWAY, NJ, USA,IEEE, vol. 1, 9 April 2003 (2003-04-09), pages 312-315, XP010643597 ISBN: 7-5635-0686-1
- MARMOR M S: "MAKE THE P2P LEAP WITH TOADNODE" WEB TECHNIQUES, MILLER FREEMAN, US, vol. 5, no. 12, December 2000 (2000-12), pages 44-49, XP008000376 ISSN: 1086-556X
- UEDA K ET AL: "Peer-to-peer network topology control within a mobile ad-hoc network" COMMUNICATIONS, 2003. APCC 2003. THE 9TH ASIA-PACIFIC CONFERENCE ON 21-24 SEPT. 2003, PISCATAWAY, NJ, USA,IEEE, vol. 1, 21 September 2003 (2003-09-21), pages 243-247, XP010688181 ISBN: 0-7803-8114-9
- LIU J ET AL: "Distributed distance measurement for large-scale networks" COMPUTER NETWORKS, ELSEVIER SCIENCE PUBLISHERS B.V., AMSTERDAM, NL, vol. 41, no. 2, 5 February 2003 (2003-02-05), pages 177-192, XP004406475 ISSN: 1389-1286
- ANIRBAN MONDAL ET AL: "Effective load-balancing of peer-to-peer systems" ONLINE, March 2003 (2003-03), XP002299388
- STARR ANDERSEN; VINCENT ABELLA: "Changes to Functionality in Microsoft Windows XP Service Pack 2 Part 2: Network Protection Technologies" ON LINE, 15 September 2004 (2004-09-15), - 15 September 2004 (2004-09-15) pages 1-56, XP002330123 Retrieved from the Internet: URL:http://www.microsoft.com/downloads/det ails.aspx?FamilyID=7bd948d7-b791-40b6-8364 -685b84158c78&DisplayLang=en> [retrieved on 2005-05-31]
- MARKATOS E P: "Tracing a large-scale peer to peer system: an hour in the life of Gnutella" CLUSTER COMPUTING AND THE GRID 2ND IEEE/ACM INTERNATIONAL SYMPOSIUM CCGRID2002 BERLIN, GERMANY 21-24 MAY 2002, PISCATAWAY, NJ, USA,IEEE COMPUT. SOC, US, 21 May 2002 (2002-05-21), pages 65-74, XP010592607 ISBN: 0-7695-1582-7

## Description

### Field of the Invention

The present invention provides a method for optimally utilizing peer to peer networks, and, in particular, to optimally utilize peer to peer networks to increase the amount of communications messages received.

### Background of the Invention

As used herein, peer to peer networks which are the subject of the present invention comprise multiple nodes, each node typically consisting both of file server and client which can send and receive communication messages or information to or from a node to which such is connected.

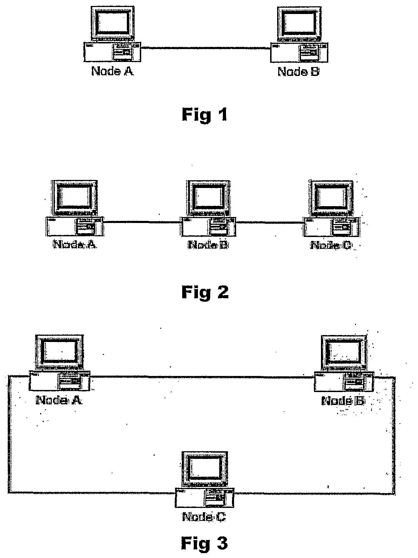

In a peer to peer network each node is connected to other nodes over a communication medium such as the internet either directly or through some type of proxy. For example, when a search request is issued such originating node sends a search request to all of the nodes to which it is connected, (see Figure 1) These nodes search their list of available files and if a match is found they send a response back with the location. However, a peer to peer proxy network typically consists of node A which is connected to a node B and node B is connected to a node C. (see Figure 2) Node A is not connected to node C such that if node A issues a search request it will be forwarded to node B and Node B will search its available files and if a match is found it will send a response back to node A. Node B will then forward node A's request to node C and Node C will search its available files and if a match is found it will send a response back to node B. Node B will then forward this response to node A. Figure 3 discloses a nonproxy loop network wherein each node is directly connected to another.

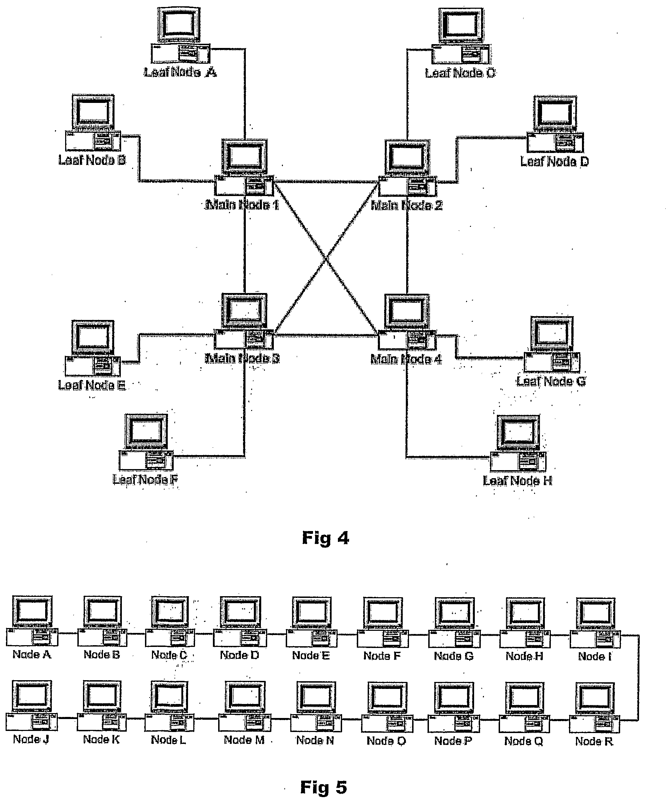

Some peer to peer networks utilize a leaf node/main node proxy topology (See Figure 4) where some nodes are classified as main nodes and the remaining nodes are classified as leaf nodes. Leaf nodes can only connect to main nodes. Only main nodes can connect to other main nodes. When a leaf node issues a search request it sends the request to the main node that it is connected to. The main node then forwards the request to any other leaf nodes that are connected to it and also to any main nodes it is connected to. These main nodes forward the request to any leaf nodes that are connected to them.

Accordingly it is an object of the present invention to provide a method for optimally utilizing a peer to peer network. It is yet another object of the invention to provide a method for reducing the number of connections required from a single node on a peer to peer network to view most, if not all, communication messages. It is yet another object of the invention to provide a method for optimally connecting to the network. It is yet another object of the invention to provide a method for locating nodes specific distances away from a first node.

"Research of Peer-to-Peer Network Architecture", Zupeng Li et.al., Proceedings of the ICCT 2003, discusses a technique in which two types of popularly used P2P network models are analyzed. Each of these two models has many problems itself, which makes it not a suitable solution for resource discovery in large peer based networks. By introducing the concepts of aggregation and hierarchical directory into the P2P network, a new type of P2P network model is proposed. By analyzing the shortcomings of napster and gnutella network model, a new type of P2P network model - Hierarchical Aggregation Network (HAN) - is proposed by this technique. By introducing a super node (SN) and constructing a content based hierarchical directory system, the concept of hierarchical directory and aggregation into P2P network is implemented. HAN has reserved the napster model's advantage on administration and management and has also avoided the gnutella model's disadvantage by casting away the broadcast-style discovery method.

"Make the PcP Leap with Toadnode", M.S. Marmor, Web Techniques, December 2000, discusses a P2P model in which computers can communicate and share files and other resources directly, rather than through a centralized server. Each participating computer-called a host or a node-is responsible for relaying data from other participating computers. This eliminates the need for traditional servers and forms a fault-tolerant network that's not dependent on any central point.

US 2003/0055892 A1 discusses a system and method of serverless peer-to-peer group management and maintenance is presented. Group formation and discovery of private, public, and enumerated groups are provided, as is a method of joining such a peer-to-peer group. Group information management provided by the present invention ensures that each node maintains a current database from the initial joining of the group through the run phase of membership. Group graph maintenance utilizes a group signature to ensure that partitions in a graph may be detected and repaired. The utility of connections within the graph are also monitored so that non-productive connections may be dropped to increase the efficiency of the group. The diameter of the graph is also monitored and adjusted to ensure rapid information transfer throughout the group. A disconnect procedure is used to maintain the graph integrity and prevent partitions resulting from the departure of a group member.

US 2003/191828 A1 may be construed to disclose a technique pertaining to peers monitor responses being received from other peers to requests for information and rate the responding peers on their ability to provide information of interest. When a responding peer is discovered to frequently provide good results, the requesting peer attempts to move closer to the responding peer by creating a direct connection with that peer and thereby promote the "good" peer to an "immediate" peer. If such a promotion would result in too many direct connections, the least important immediate peer is demoted to an "indirect" peer. The criteria used for evaluating the relative importance of at least the immediate peers is preferably a time weighted average that also measures consistency and reliability and preferably includes factors not only representative of the peer's ability to provide requested information, but also of its proximity to the source of that information so that it can prove that information efficiently.

### SUMMARY OF THE INVENTION

Generally, the present invention provides a method for optimally utilizing a peer to peer network by controlling how a node connects into the network and by controlling how a node locates optimal nodes as well as by how the node interacts with the network and other nodes. There are provided a method and an apparatus according to the independent claims.

In one embodiment a first node issues a search for preselected information to help locate other nodes by watching responses. In another embodiment a first node issues a ping and compares the hops value to a predefined optimal value. Preferably, a first node maintains connection statistics and compares these to a configured optimal value.

Preferably, a first node continuously clears its host cache at predetermined times.

Preferably, a node is configured to have one or more of the features set forth below. These features are employed in the invention to optimally utilize a peer to peer network as compared to the other network nodes on the particular network being addressed not so optimized. Thus, not all of the capabilities need to be programmed into each node in order to optimally utilize the network. The presently preferred methods of the present invention include:
- configuring a node to send pings and review the distance parameters contained in the results.
- configuring a node to send preconfigured searches and review the distance parameters contained in the results.
- configuring a node to clear or modify its host cache based on a comparison of its host cache size.
- configuring a node to clear or modify its host cache based on comparison of how long its host cache has existed.
- configuring a node to throttle its connection attempts.
- configuring a node to drop connections based on calculations of duplicate communication messages received.
- configuring a node to drop connections based on the last time a transmission was received from a connection.
- configuring a node to drop connections based on how well the connection is performing when compared to other connections.
- configuring a node to connect to other similar nodes or a master node and share processing of the network.

Other advantages of the present invention will become apparent from a perusal of the following detailed description of a presently preferred embodiment of the invention taken in connection with the accompanying drawings.

### Brief Description of the Drawings

Figure 1 is a simplified schematic of a two node peer to peer network;
Figure 2 is a simplified schematic of a peer to peer proxy network;
Figure 3 is a simplified schematic view of a peer to peer, nonproxy, loop network;
Figure 4 is a simplified schematic of a peer to peer leaf/main node network;
Figure 5 is a simplified schematic of a peer to peer network consisting of more than 5 hops;
Figure 6 is a simplified schematic of a peer to peer network with nodes sharing the load;
Figure 7 is a simplified schematic of a peer to peer network with nodes sharing the load but not yet connected;
Figure 8 is a simplified schematic of a peer to network with a node throttling its connections;

### Description of a Presently Preferred Embodiment

Generally, peer to peer networks are quite large, often a million or more nodes. To reduce the bandwidth required to operate such networks, nodes have a community imposed transmission distance limitation. Most communication messages contain communication radius parameters such as hops. Hops is a value that normally
starts at 0 and increments each time the communications is forwarded. When hops reaches a preset limit, often 5, the communications is dropped from the network. This effectively enforces a community "time to live" value and limits the number of nodes that would receive the communications from a particular transmitting node. It therefore would be optimal and advantageous to connect in such a way that a node would be within reach of all communication messages.

In one embodiment of the invention a first node wishing to be optimally connected to a second node issues a search request containing a preconfigured search term. This search term can be any term but preferably one that will match many files on other nodes. As other nodes available through the second node respond to the first node, the first node looks at the hops value of their responses and compares it to a value which value can be preconfigured by the operator. Such value can be generated by a mathematical calculation based on other values, or it can be in relation to other values. If the hop value is equal or greater than the compared value, the first node will attempt to connect to the node sending the response. If the hop value is less than the compared value the first node will not attempt to connect to the node sending the response. This method allows the first node to connect to node that are N hops away from currently connected nodes and expands its communications radius.

In another embodiment, the first node connects to a second node and issues a ping rather than a second request. As other nodes available through the second node respond to the first node, the first node looks at the hops value of their responses and compares it to a value which can be preconfigured by the operator. Such value can be generated by a mathematical calculation based on other values, or it can be in relation to other values as in the first embodiment. If the hop value is more or greater than the compared value, the first node will attempt to connect to the node sending the response. If the hop value is less than the compared value the first node will not attempt to connect to the node sending the response. This method allows the first node to connect to node that are N hops away from currently connected nodes and expands its communications radius.

Preferably, a first node seeking to locate other nodes on the network for connection purposes issues a search request containing a preconfigured search term. This search term can be any term but preferably one that will match
many files on other nodes. As other nodes available through the second node respond to the first node, the first node attempts to connect to them or adds them to a cache to be connected to later.

Referring to figure 3, it is possible for a first node to be connected to other nodes which are within non-optimal distances from each other and these other nodes themselves having a second path to the first node. Other non-optimal connections are possible but the result of that is the first node would receive duplicate communications messages. It would benefit the first node if it could detect this situation, thus, preferably, the first node maintains a count of duplicate communication messages which are received from each node. At intervals the first node will use the amount of duplicate communication messages in a preconfigured equation such as a comparison to a value, which value can be preconfigured by the operator, a value generated by a mathematical calculation based on other values or it can be in relation to other values. The comparison can be any comparison, for instance greater or less than or an average of. If using the equation, the node detects the connection is not optimal or meeting a certain criteria the first node will disconnect that connection.

It is possible for a first node to connect to a second node which is not connected to any other nodes or the second node may be configured to not forward any communications. In this situation the second node would be deemed unproductive. Preferably, the first node maintains a count of received communications messages for its connections. At intervals the first node will use the amount of received communication messages in a preconfigured equation such as a comparison to a value. This value can be preconfigured by the operator, it can be a value generated by a mathematical calculation based on other values or it can be in relation to other values. The comparison can be any comparison, for instance greater or less than or an average of. If using the equation, the node detects the connection is not optimal or meeting a certain criteria the first node will disconnect that connection.

Preferably, the first node maintains a count of searches it has received from each connection. At intervals the first node will use these counts in a preconfigured equation such as a comparison to a value. This value can be preconfigured by the operator, it can be a value generated by a mathematical
calculation based on other values or it can be in relation to other values. The comparison can be any comparison, for instance greater or less than or an average of. If using the equation, the node detects the connection is not optimal or meeting a certain criteria the first node will disconnect that connection.

Peferably, the first node maintains the last time the node received a communication message on a specific connection. At intervals the first node will use the last transmission time in a preconfigured equation such as a comparison to a value, which value can be preconfigured by the operator, generated by a mathematical calculation based on other values or it can be in relation to other values. The comparison can be any comparison, for example greater or less than or an average of. If using the equation, the node detects the connection is not optimal or meeting a certain criteria the first node will disconnect that connection.

In some situations it may be preferable to drop connections that are not performing as well as the average of other connections or connections that are not performing within a certain percentage of the average of other connections or against a predefined performance range. Preferably, the first node would keep specific communications statistics on its connections and at intervals calculate the average of these statistics and drop those connections that are below average or drop those connections that are below some percentage of the average.

Sometimes a node can get overloaded processing communications on peer to peer networks. In this situation it would be advantageous to be able to split the load of processing communications. Preferably, multiple nodes can connect to the network at different points and share the load. These multiple nodes would maintain communications paths between themselves or to a master node and transmit and receive information about what other network nodes and where each node is connected. This would allow multiple nodes to share the load. These nodes may also report back to a master node with the searches they are processing.

When connecting many times to a network, a load is placed on the resources of the node in relation to the number of connection attempts are occurring at one time. It would be a benefit to the node if it had some way to control or throttle multiple connection attempts to the network. Preferably, the node is
configured for a set number of concurrent connection attempts. As connections are accepted, the node will add new connection attempts to maintain this set value. Without this method, a node wishing to connect to 1,000 other nodes would attempt 1,000 concurrent connections. With the method, and configured for a maximum number of 50 concurrent connections, the node would attempt 50 concurrent connection attempts to the network. As these connection attempts succeeded or failed the node would add enough new connection attempts to reach the set limit of 50. Once the limit of 1,000 connections are established the node would not attempt any further connections.

Although limiting and controlling the concurrent number of connection attempts by the node reduces load, it is sometimes desired to initially start with a large number of concurrent connection attempts and then limit the number to a set value. Preferably, the node is configured to attempt only a set number of concurrent connection attempts. When the connection attempts first start, the node attempts as many connections as possible until the number of successful connections reaches some value. This value can be preconfigured by the operator, generated by a mathematical calculation based on other values, or it can be in relation to other values. Once this value is reached the node will reduce its attempts to the limited concurrent connection method described above.

In many cases, a first node may connect to a second node and after some time the second node may stop transmitting without the first node knowing of such occurrence. This second node may stop transmitting because of technical problems or it may stop transmitting because it is no longer being utilized. It would be a benefit to the first node to drop the connection just as a precaution after some time has passed. Preferably, the first node is configured to keep track of when it connected to a second node. After some configured or calculated time limit is reached, the first node drops the connection and attempts to connect to either the same node again or to a different node.

As nodes connect to the network they are constantly receiving address information about other nodes to which it can be potentially connected. As these new nodes are discovered they are added to a cache. This cache is used to provide the node with potential new connections. Some nodes have a set limit on the number concurrent connections they can have. Should their set limit be reached they will not
connect to any further nodes but they will continue to add any newly discovered nodes to their cache. Should a node maintain very long connections, nodes in this cache may become invalid for various reasons. When the node finally loses connections and attempts to connect to nodes in the cache, resources are consumed and wasted because the nodes are invalid. Preferably, the node is configured to add nodes to its cache as normal but also configured to clear this cache at set intervals or when the cache reaches a certain limit. By constantly clearing the cache a reduction in invalid nodes is achieved.

### Examples

The following Examples illustrate embodiment of the methods according to the present Invention and comparative examples.

### Example 1: Referring to Figure 5, this example illustrates a method for obtaining hop information from search requests and using this information to optimally connect to the network.

In this example node A is connected to node B and wishes to optimally connect into the rest of the network. The network is configured to allow communication messages to travel a maximum of 5 hops so node A is configured to look for nodes 5 hops away. Each node contains a file called "Samuel.txt.' Node A sends out a search message to the network via node B with the term "Samuel.txt." Nodes A, B, C, D, E and F all respond. Node A reviews each search response and finds that node F is 5 hops away. Node A connects to node F. Node A sends out a search message to the network via node F with the term "Samuel.txt." Nodes B, C, D, E, F, G, H, I and R respond. Node A reviews each search response and finds that nodes B and R are 5 hops away. Node A knows that it is already connected to node B so it connects only to node R. Node A sends out a search message to the network via node R with the term "Samuel.txt." Nodes F, G, H, I, R, Q, P, O and N respond. Node A reviews each search response and finds that nodes F and N are 5 hops away. Node A knows that it is already connected to node F so it connects only to node N. Node A sends out a search message to the network via node N with the term "Samuel.txt." Nodes J, K, L, M, N, O, P, Q, and R respond. Node A reviews each search response and finds that nodes J and R are 5 hops away. Node A knows that it is already connected to node R so it connects only to node J. Node A sends out a search message to the network via node J with the term "Samuel.txt." Nodes J, K, L, M, and N respond. Node A reviews each search response and finds that node N is 5 hops away. Node A knows that it is already connected to node N so it does not connect. Node A is now within 5 hops of all nodes and will receive all communications from all nodes.

### Example 2: Referring again to Figure 5, example 2 illustrates a method for obtaining hop information from pings and using this information to optimally connect to the network

In this example, node A is connected into node B and wishes to optimally connect into the rest of the network. The network is configured to allow communication messages to travel a maximum of 5 hops so node A is configured to look for nodes 5 hops away. Node A sends out a ping message to the network via node B. Nodes A, B, C, D, E and F all respond. Node A reviews each response and finds that node F is 5 hops away. Node A connects to node F. Node A sends out a ping to the network via node F. Nodes B, C, D, E, F, G, H, I and R respond. Node A reviews each response and finds that nodes B and R are 5 hops away. Node A knows that it is already connected to node B so it connects only to node R. Node A sends out a ping message to the network via node R. Nodes F, G, H, I, R, Q, P, O and N respond. Node A reviews each response and finds that nodes F and N are 5 hops away. Node A knows that it is already connected to node F so it connects only to node N. Node A sends out a ping message to the network via node N. Nodes J, K, L, M, N, O, P, Q, and R respond. Node A reviews each response and finds that nodes J and R are 5 hops away. Node A knows that it is already connected to node R so it connects only to node J. Node A sends out a ping message to the network via node J. Nodes J, K, L, M, and N respond. Node A reviews each response and finds that node N is 5 hops away. Node A knows that it is already connected to node N so it does not connect. Node A is now within 5 hops of all nodes and will receive all communications from all nodes.

### Example 3: Referring to Figure 5, example 3 illustrates a method for locating other nodes so that more connection options exist.

In this example Node A wishes to find other nodes to connect to. Node A is already connected to node B. The network is configured to allow communication messages to travel a maximum of 5 hops. Each node contains a file called "Samuel.txt.' Node A sends out a search message to the network via node B with the term "Samuel.txt." Nodes A, B, C, D, E and F all respond. Node A reviews each search response and uses the address information contain in the message to connect to these nodes.

### Example 4: Referring to Figures 2 and 3, example 4 illustrates a method for optimizing a node's connections by looking at the number of duplicate messages that exist.

Referring to Figure 3, B seeks to locate the file "Samuel.txt" and sends a search request out both of its connections to nodes A and C. Node C receives the search request. Node A receives the search request. Node A forwards the search request to node C. Node C records that it has received a duplicate message from node A. Node C finds that it has been configured to drop connections when it receives 1 duplicate message so it drops the connection to node A. Node C can still see searches from node A because they will travel through node B. Now referring to figure 2, the end result is that only one connection is needed to receive all communications from the network.

### Example 5: Referring to Figure 4, example 5 illustrates a method for optimizing a node's connections by monitoring the number of communication messages received on a connection.

In this example, main node 4 wishes to optimize its connections by monitoring how many communication messages it is receiving from all connections and comparing them to an average. If a connection does not meet the average it will disconnect the connection. Main node 4 records the following statistics:
Main node 2 has sent 1 communication message
Main node 3 has sent 1 communication message
Leaf node G has sent 1 communication message
Leaf node H has sent 1 communication message
Main node 4 then waits, for example, 5 minutes, and records the following statistics:
Main node 2 has sent 51 communication messages
Main node 3 has sent 53 communication messages
Leaf node G has sent 54 communication messages
Leaf node H has sent 1 communications message
Main node 4 adds the delta of all messages together and divides by 4 to get an average of 38.75. Because main node 4 is configured to drop any connections below the average, it will drop the connection to leaf node H.

### Example 6: Referring again to Figure 4, example 6, illustrates a method for optimizing a node's connections by monitoring the time of the last transmission received on a connection.

In this example, main node 4 is programmed to optimize its connections by monitoring when the last time its connections received a communication message and comparing them to a value. If a connection has not received any communication messages within 1 minute the node will drop the connection. Main node 4 records the following statistics:
Main node 2 has sent 1 communication message
Main node 3 has sent 1 communication message
Leaf node G has sent 1 communication message
Leaf node H has sent 1 communication message
Main node 4 then waits 1 minute and records the following statistics:
Main node 2 has sent 51 communication messages
Main node 3 has sent 53 communication messages
Leaf node G has sent 54 communication messages
Leaf node H has sent 1 communications message
Because main node 4 is configured to drop any connections that have not received any communication messages within 1 minute it will drop the connection to leaf node H.

### Example7: Referring to Figure 4 again, example 7 illustrates a method for optimizing a node's connections by monitoring the number of search requests received on its connections.

In this example, main node 4 is programmed to optimize its connections by monitoring how many search requests it is receiving from all connections and comparing them to an average. If a connection does not meet the average it will disconnect the connection. Main node 4 records the following statistics:
Main node 2 has sent 1 search request
Main node 3 has sent 1 search request
Leaf node G has sent 1 search request
Leaf node H has sent 1 search request
Main node 4 then waits, 5 minutes and records the following statistics:
Main node 2 has sent 51 search request
Main node 3 has sent 53 search request
Leaf node G has sent 54 search request
Leaf node H has sent 1 search request
Main node 4 adds the delta of all messages together and divides by 4 to get an average of 38.75. Because main node 4 is configured to drop any connections below the average, it will drop the connection to leaf node H.

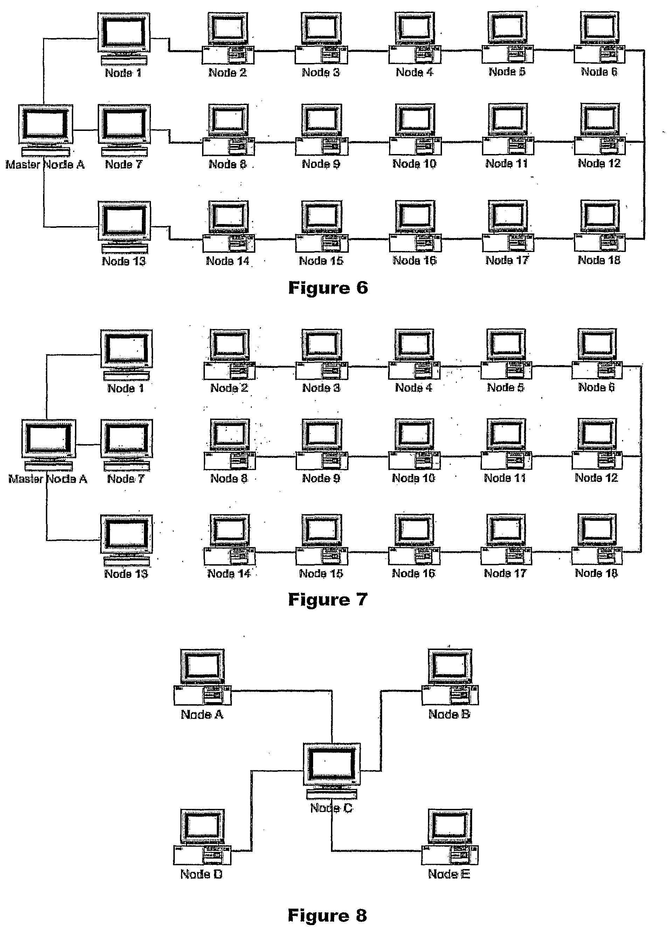

### Example 8: Referring to Figure 6, example 8 illustrates a method for splitting the load among multiple nodes and reporting the information to a master node. The master node also keeps track of which network nodes the load sharing nodes are connected to.

Here, Nodes 1, 7 and 13 are depicted as sharing the load of monitoring a network at optimal points. Node 1 is connected to node 2 and reports this information to master node A. Node 7 is connected to node 8 and reports this information to master node A. Node 13 is connected to node 14 and reports this information to master node A. Node 7 wishes to connect to node 2 and sends this request master node A. Master node A knows that node 1 is connected to node 2 and denies the request.

Node 2 issues a search request for "samuel.txt." Node 1 receives this communications message and forwards it to master node A. Master node A records the information. Node 17 issues a search request for "bob.txt" Node 13 receives this communication message and forwards it to master node A. Master node A records this information.

### Example 9: Referring to Figures 6 and 7, example 9 illustrates a method for splitting the load among multiple nodes and reporting the information to a master node. The master node also informs the load sharing nodes which network nodes to connect to.

Referring first to Figure 7, in this example Nodes 1, 7 and 13 wish to join the network. Nodes 1, 7 and 13 send communication messages to master node A requesting clients to connect to. Master node A replies to node 1 with connection
information for node 2. Master node A replies to node 7 with connection information for node 8. Master node A replies to node 13 with connection information for node 14.

Nodes 1, 7 and 13 connect and are sharing the load of monitoring a network at optimal points. Node 1 is connected to node 2 and reports this information to master node A. Node 7 is connected to node 8 and reports this information to master node a. Node 13 is connected to node 14 and reports this information to master node A. Node 7 wishes to connect to node 2 and sends this request to master node A. Master node A knows that node 1 is connected to node 2 and denies the request.

Node 2 issues a search request for "samuel.txt." Node 1 receives this communications message and forwards it to master node A. Master node A records the information. Node 17 issues a search request for "bob.txt." Node 13 receives this communication message and forwards it to master node A. Master node A records this information.

### Example 10: Referring to Figure 8, example 10 illustrates a method for throttling connection attempts to a network.

In this example node C wishes to connect to a maximum of four other nodes. In its cache it has the following entries:
Node A
Node H
Node L
Node V
Node B
Node O
Node E
Node D

Node C is configured to only have a maximum of 2 concurrent connection attempts and to wait 10 seconds for each connection attempt. Node C attempts to connect to node A and node H. Node C connects to node A and establishes a connection. Node C continues to wait for the connection attempt to node H. Because Node C connected to node A, there is now one empty connection slot so node C attempts to connect to Node V. The connection attempt to node H fails so there is now one empty connection slot. Node C attempts to connect to node B and this connection attempt succeeds. Because once again there is one empty connection slot node C attempts to connect to node O. An error occurs immediately and at the same time the connection attempt to node V fails as well. There are now two empty connection slots available. Node C attempts to connect to node E and node D. Node C's connection attempt with node D is successful. After 10 seconds, the connection attempt to node E fails.

While presently preferred embodiments have been described and depicted, the invention may be otherwise embodied within the scope of the following claims:

## Claims

1. A method for optimally utilizing a peer to peer network having at least a first node and a second node, said method comprising the steps of
a. connecting said first node to said second node through said peer to peer network;
b. issuing one of a ping request and a search request for a predefined term to the network from said first node through said second node;
c. receiving responses by said first node from said second and any node available through said second node, wherein each response includes distance information indicating a distance between the first node and the responding node;
d. calculating a distance value by said first node with an equation;
e. comparing the distance information in each response with the calculated distance value;
f. selecting particular responding nodes in the network that responded to said first node based on the distance information in the responses of the particular responding nodes being greater than or equal to the distance value; and
g. connecting said first node to said selected particular responding nodes,
wherein the first node does not connect to other responding nodes when the distance information in the response of the other responding nodes is less than the distance value.

2. The method of claim 1, wherein the distance information is a hop value.

3. The method of claim 1, further comprising:
h. keeping a statistic on at least one connection between the first node and a connected node that is connected to the first node;
i. using the statistic to determine whether the connected node should be disconnected from the first node; and
j. disconnecting the first node from the connected node.

4. The method of claim 3, wherein the statistic is a number of received communication messages.

5. The method of claim 3, wherein the statistic is a number of searches received.

6. The method of claim 3, wherein the statistic is based on an average or within a percentage of an average of other connections.

7. The method of claim 3, wherein it is determined that the connected node should be disconnected from the first node when the statistic is less than a threshold value.

8. The method of claim 3, wherein it is determined that the connected node should be disconnected from the first node when the statistic is less than other statistics of other connected nodes.

9. The method of claim 1, further comprising:
h. storing a list of nodes for the first node to connect with;
i. attempting to make at least one connection to a third node from the list of nodes; and
j. waiting for a fixed duration of time in response to a failed connection attempt with the third node before attempting to make a connection to fourth node in the list of nodes.

10. The method of claim 1, further comprising:
h. splitting a communication load amongst at least two load sharing nodes, wherein each of the at least two load sharing nodes is directly connected to the first node;
i. monitoring, by each load sharing node, respective sub networks of the peer to peer network.

11. The method of claim 10, wherein each load sharing node is in communication with the first node.

12. The method of claim 11, wherein the first node receives the network communications from the at least two load sharing nodes.

13. A node in a peer-to-peer network, the node comprising:
processing logic configured to:
connect said first node to said second node through said peer to peer network;
issue one of a ping request and a search request for a predefined term to the network through said second node;
receive responses from said second and any node available through said second node, wherein each response includes distance information indicating a distance between the first node and the responding node;
calculate a distance value by said first node with an equation;
compare the distance information in each response with the calculated distance value;
select particular responding nodes in the network that responded to said first node based on the distance information in the responses of the particular responding nodes being greater than or equal to the distance value; and
connect said first node to said selected particular responding nodes,
wherein the first node does not connect to other responding nodes when the distance information in the response of the other responding nodes is less than the distance value.

14. The node according to claim 13, being configured to perform all steps of a method according to any one of claims 2 to 12.

## Patentansprüche

1. Verfahren zur optimalen Nutzung eines Peer-zu-Peer-Netzwerks mit zumindest einem ersten Knoten und einem zweiten Knoten, wobei das Verfahren die Schritte umfasst:
a. Verbinden des ersten Knotens mit dem zweiten Knoten durch das Peer-zu-Peer-Netzwerk;
b. Aussenden einer Ping-Anforderung und/oder einer Suchanforderung für einen vordefinierten Ausdruck an das Netzwerk von dem ersten Knoten durch den zweiten Knoten;
c. Empfangen von Antworten durch den ersten Knoten von dem zweiten Knoten und jedwedem Knoten, der durch den zweiten Knoten verfügbar ist, wobei jede Antwort Abstandsinformationen umfasst, die einen Abstand zwischen dem ersten Knoten und dem antwortenden Knoten angeben;
d. Berechnen eines Abstandswerts durch den ersten Knoten mit einer Gleichung;
e. Vergleichen der Abstandsinformationen in jeder Antwort mit dem berechneten Abstandswert;
f. Auswählen von bestimmten antwortenden Knoten in dem Netzwerk, die dem ersten Knoten antworteten, auf der Grundlage der Tatsache, dass die Abstandsinformationen in den Antworten der bestimmten antwortenden Knoten größer als der oder gleich dem Abstandswert sind; und
g. Verbinden des ersten Knotens mit den ausgewählten bestimmten antwortenden Knoten, wobei der erste Knoten sich nicht mit anderen antwortenden Knoten verbindet, wenn die Abstandsinformationen in der Antwort der anderen antwortenden Knoten kleiner als der Abstandswert sind.

2. Verfahren gemäß Anspruch 1, wobei die Abstandsinformationen ein Sprungwert sind.

3. Verfahren gemäß Anspruch 1, weiterhin umfassend:
h. Führen einer Statistik bezüglich zumindest einer Verbindung zwischen dem ersten Knoten und einem verbundenen Knoten, der mit dem ersten Knoten verbunden ist;
i. Verwenden der Statistik, um zu bestimmen, ob der verbundene Knoten von dem ersten Knoten getrennt werden soll; und
j. Trennen des ersten Knotens von dem verbundenen Knoten.

4. Verfahren gemäß Anspruch 3, wobei die Statistik eine Anzahl empfangener Kommunikationsnachrichten ist.

5. Verfahren gemäß Anspruch 3, wobei die Statistik eine Anzahl empfangener Suchvorgänge ist.

6. Verfahren gemäß Anspruch 3, wobei die Statistik auf einem Mittelwert basiert oder innerhalb eines Prozentsatzes eines Mittelwerts anderer Verbindungen liegt.

7. Verfahren gemäß Anspruch 3, wobei bestimmt wird, dass der verbundene Knoten von dem ersten Knoten getrennt werden soll, wenn die Statistik kleiner als ein Schwellwert ist.

8. Verfahren gemäß Anspruch 3, wobei bestimmt wird, dass der verbundene Knoten von dem ersten Knoten getrennt werden soll, wenn die Statistik kleiner als andere Statistiken anderer verbundener Knoten ist.

9. Verfahren gemäß Anspruch 1, weiterhin umfassend:
h. Speichern einer Liste von Knoten, mit denen sich der erste Knoten verbinden soll;
i. Versuchen, zumindest eine Verbindung zu einem dritten Knoten aus der Liste von Knoten herzustellen; und
j. Warten, für eine festgelegte Zeitdauer in Antwort auf einen fehlgeschlagenen Verbindungsversuch mit dem dritten Knoten, bevor eine Verbindung zu einem vierten Knoten in der Liste von Knoten versucht wird.

10. Verfahren gemäß Anspruch 1, weiterhin umfassend:
h. Aufteilen einer Kommunikationslast unter zumindest zwei lastteilenden Knoten, wobei jeder der zumindest zwei lastteilenden Knoten direkt mit dem ersten Knoten verbunden ist;
i. Überwachen, durch jeden lastteilenden Knoten, von jeweiligen Unternetzwerken des Peer-zu-Peer-Netzwerks.

11. Verfahren gemäß Anspruch 10, wobei jeder lastteilende Knoten in Kommunikation mit dem ersten Knoten steht.

12. Verfahren gemäß Anspruch 11, wobei der erste Knoten die Netzwerkkommunikationen von den zumindest zwei lastteilenden Knoten empfängt.

13. Knoten in einem Peer-zu-Peer-Netzwerk, wobei der Knoten umfasst:
eine Verarbeitungslogik, die konfiguriert ist, um:
den ersten Knoten mit dem zweiten Knoten durch das Peer-zu-Peer-Netzwerk zu verbinden;
eine Ping-Anforderung und/oder eine Suchanforderung für einen vordefinierten Ausdruck an das Netzwerk durch den zweiten Knoten auszusenden;
Antworten von dem zweiten und jedwedem anderen Knoten zu empfangen, der durch den zweiten Knoten verfügbar ist, wobei jede Antwort Abstandsinformationen umfasst, die einen Abstand zwischen dem ersten Knoten und dem antwortenden Knoten angeben;
einen Abstandswert durch den ersten Knoten mit einer Gleichung zu berechnen;
die Abstandsinformationen in jeder Antwort mit dem berechneten Abstandswert zu vergleichen;
bestimmte antwortenden Knoten in dem Netzwerk auszuwählen, die dem ersten Knoten antworteten, auf der Grundlage der Tatsache, dass die Abstandsinformationen in den Antworten der bestimmten antwortenden Knoten größer als der oder gleich dem Abstandswert sind; und
den ersten Knoten mit den ausgewählten bestimmten antwortenden Knoten zu verbinden, wobei der erste Knoten sich nicht mit anderen antwortenden Knoten verbindet, wenn die Abstandsinformationen in der Antwort der anderen antwortenden Knoten kleiner als der Abstandswert sind.

14. Knoten gemäß Anspruch 13, der konfiguriert ist, um alle Schritte eines Verfahrens gemäß zumindest einem der Ansprüche 2 bis 12 durchzuführen.

## Revendications

1. Procédé pour utiliser de manière optimale un réseau poste à poste comportant au moins un premier noeud et un deuxième noeud, le procédé comprenant les étapes consistant à
a. connecter ledit premier noeud audit deuxième noeud par l'intermédiaire dudit réseau poste à poste ;
b. délivrer l'une parmi une demande de Ping et une demande de recherche pour un terme prédéfini vers le réseau depuis ledit premier noeud par l'intermédiaire dudit deuxième noeud ;
c. recevoir des réponses par ledit premier noeud depuis ledit deuxième et n'importe quel autre noeud disponible par l'intermédiaire dudit deuxième noeud dans lequel chaque réponse comprend des informations de distance indiquant une distance entre le premier noeud et le noeud de réponse ;
d. calculer une valeur de distance par ledit premier noeud avec une équation ;
e. comparer les informations de distance dans chaque réponse avec la valeur de distance calculée ;
f. sélectionner des noeuds de réponse particuliers dans le réseau ayant répondu audit premier noeud sur la base des informations de distance dans les réponses des noeuds de réponse particuliers étant supérieures ou égales à la valeur de distance ; et
g. connecter ledit premier noeud auxdits noeuds de réponse particuliers sélectionnés, dans lequel le premier noeud ne se connecte pas aux autres noeuds de réponse lorsque les informations de distance dans la réponse des autres noeuds de réponse sont inférieures à la valeur de distance.

2. Procédé selon la revendication 1, dans lequel les informations de distance correspondent à une valeur de saut.

3. Procédé selon la revendication 1, comprenant en outre les étapes consistant à:
h. garder une statistique sur au moins une connexion entre le premier noeud et un noeud connecté qui est connecté au premier noeud ;
i. utiliser la statistique pour déterminer si le noeud connecté devrait être déconnecté du premier noeud ; et
j. déconnecter le premier noeud du noeud connecté.

4. Procédé selon la revendication 3, dans lequel la statistique est un nombre de messages de communication reçus.

5. Procédé selon la revendication 3, dans lequel la statistique est un nombre de recherches reçues.

6. Procédé selon la revendication 3, dans lequel la statistique est basée sur une moyenne ou à l'intérieur d'un pourcentage d'une moyenne des autres connexions.

7. Procédé selon la revendication 3, dans lequel il est déterminé que le noeud connecté devrait être déconnecté du premier noeud lorsque la statistique est inférieure à une valeur de seuil.

8. Procédé selon la revendication 3, dans lequel il est déterminé que le noeud connecté devrait être déconnecté du premier noeud lorsque la statistique est inférieure aux autres statistiques des autres noeuds connectés.

9. Procédé selon la revendication 1, comprenant en outre les étapes consistant à:
h. enregistrer une liste de noeuds à connecter avec le premier noeud ;
i. essayer d'établir au moins une connexion à un troisième noeud à partir de la liste de noeuds ; et
j. attendre une durée de temps fixe en réponse à une tentative de connexion échouée avec le troisième noeud avant d'essayer d'établir une connexion à un quatrième noeud dans la liste de noeuds.

10. Procédé selon la revendication 1, comprenant en outre les étapes consistant à:
h. diviser une charge de communication parmi au moins deux noeuds de partage de charge, dans lequel chacun parmi les au moins deux noeuds de partage de charge est directement connecté au premier noeud ;
i. contrôler, par chaque noeud de partage de charge, les sous-réseaux respectifs du réseau poste à poste.

11. Procédé selon la revendication 10, dans lequel chaque noeud de partage de charge est en communication avec le premier noeud.

12. Procédé selon la revendication 11, dans lequel le premier noeud reçoit les communications réseau depuis les au moins deux noeuds de partage de charge.

13. Noeud dans un réseau poste à poste, le noeud comprenant :
une logique de traitement configurée pour :
connecter ledit premier noeud audit deuxième noeud par l'intermédiaire dudit réseau poste à poste ;
délivrer l'une parmi une demande de Ping et une demande de recherche pour un terme prédéfini vers le réseau par l'intermédiaire dudit deuxième noeud ;
recevoir des réponses depuis ledit deuxième et n'importe quel autre noeud disponible par l'intermédiaire dudit deuxième noeud, dans lequel chaque réponse comprend des informations de distance indiquant une distance entre le premier noeud et le noeud de réponse ;
calculer une valeur de distance par ledit premier noeud avec une équation ;
comparer les informations de distance dans chaque réponse avec la valeur de distance calculée ;
sélectionner des noeuds de réponse particuliers dans le réseau ayant répondu audit premier noeud sur la base des informations de distance dans les réponses des noeuds de réponse particuliers étant supérieures ou égales à la valeur de distance ; et
connecter ledit premier noeud auxdits noeuds de réponse particuliers sélectiorinés,
dans lequel le premier noeud ne se connecte pas aux autres noeuds de réponse lorsque les informations de distance dans la réponse des autres noeuds de réponse sont inférieures à la valeur de distance.

14. Noeud selon la revendication 13, étant configuré pour exécuter toutes les étapes d'un procédé selon l'une quelconque des revendications 2 à 12.
